(19) Europäisches Patentamt

European Patent Office

Office européen des brevets

(11) **EP 2 203 400 B3**

(12) **NOUVEAU FASCICULE DE BREVET EUROPEEN**

Après la procédure de limitation (B3-1)

(45) Mention de la délivrance du brevet:
**15.06.2011 Bulletin 2011/24**

(45) Date de publication et mention de la décision de limitation:
**B3-1 20.07.2016 Bulletin 2016/29**

(21) Numéro de dépôt: **08867183.9**

(22) Date de dépôt: **10.10.2008**

(51) Int Cl.:
*C04B 28/04* (2006.01)   *C04B 14/12* (2006.01)
*C04B 14/16* (2006.01)   *C04B 18/08* (2006.01)
*C04B 28/02* (2006.01)   *C04B 14/10* (2006.01)

(86) Numéro de dépôt international:
**PCT/IB2008/003988**

(87) Numéro de publication internationale:
**WO 2009/083809 (09.07.2009 Gazette 2009/28)**

(54) **UTILISATION ET PROCÉDÉ D'OBTENTION D'UN BÉTON LÉGER STRUCTUREL**

VERWENDUNG EINES LEICHTGEWICHTIGEN STRUKTURBETONS SOWIE VERFAHREN ZU SEINER GEWINNUNG

USE OF A LIGHTWEIGHT STRUCTURAL CONCRETE AND METHOD OF OBTAINING IT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.10.2007 FR 0707164**
**30.06.2008 FR 0803655**

(43) Date de publication de la demande:
**07.07.2010 Bulletin 2010/27**

(73) Titulaire: **Lafarge**
**75116 Paris (FR)**

(72) Inventeurs:
• **MEILLE, Sylvain**
**F-38230 Tignieu-Jameyzieu (FR)**
• **BONNET, Emmanuel**
**F-38590 Chabons (FR)**
• **CHANVILLARD, Gilles**
**F-38790 Saint Georges d'Espéranche (FR)**
• **SCHWARTZENTRUBER, Arnaud**
**F-69740 Genas (FR)**

(74) Mandataire: **Pochart, François**
**August & Debouzy Avocats**
**6/8 Avenue de Messine**
**75008 Paris (FR)**

(56) Documents cités:
GB-A- 1 165 005       JP-A- 6 122 569
US-A- 4 077 809       US-A1- 2002 117 086
US-A1- 2007 125 275

EP 2 203 400 B3

**Description**

Le domaine de l'invention est celui des bétons légers structuraux à faible conductivité thermique. De tels bétons peuvent être destinés à la réalisation de structures coulées en place, de structures préfabriquées ou d'éléments de structure préfabriqués pour bâtiments et structures de génie civil.

Le béton structurel se compose de granulats (c'est à dire de sables, gravillons, graviers, cailloux) qui sont liés entre eux par un liant hydraulique. Un liant hydraulique comprend du ciment et éventuellement des additions. Lorsque le liant hydraulique est mis en présence d'eau, il s'hydrate et fait prise. Des adjuvants sont éventuellement ajoutés pour améliorer les caractéristiques du liant hydraulique. Les proportions relatives des quatre constituants fondamentaux d'un béton courant sont les suivantes :

|        | Eau     | Air    | Ciment  | Granulats |
|--------|---------|--------|---------|-----------|
| Volume | 14%-22% | 1%-6%  | 7%-14%  | 60%-78%   |
| Masse  | 5%-9%   | N/A    | 9%-18%  | 63%-85%   |

Les résistances mécaniques en compression obtenues classiquement sur éprouvettes cylindriques 16x32 mm, pour du béton structurel normal sont généralement de l'ordre de 25 à 35 MPa, (béton de type C25/30 selon la norme EN 206-1).

Parmi les granulats bien connus dans le domaine des matériaux de construction, on trouve des granulats légers, le plus souvent artificiels et fabriqués à partir de matières minérales, qui sont notamment utilisés pour la fabrication de bétons dits « légers ». Les granulats légers sont notamment définis par la norme NF EN 13055-1 de Décembre 2002. Ces granulats légers sont par exemple des argiles (argiles expansées), des schistes (schistes expansés) ou des silicates (vermiculite ou perlite).

Parmi les granulats bien connus dans le domaine des matériaux de construction, on trouve également des granulats traités, de manière à diminuer leur capacité d'absorption d'eau, par différents types de matériaux et via différents procédés. On trouve par ailleurs des granulats partiellement ou totalement pré-saturés en eau, par une immersion réalisée au moins 24 heures avant l'utilisation desdits granulats saturés.

Les granulats sont caractérisés non seulement par les matériaux qui les constituent mais également par leur porosité c'est à dire le volume de vide par unité de volume apparent (ou Volume de vide/Volume total). La porosité est une fonction de la masse volumique réelle $\Delta$ et de la masse volumique du solide constituant le granulat $\gamma_0$ selon la formule p%= $100(1-\Delta/\gamma_0)$.

La teneur en eau des bétons structurel utilisés pour l'industrie se situe généralement dans une plage de 5 à 9% en masse. Le béton comprend différentes catégories d'eau. Tout d'abord, l'eau efficace est l'eau située entre les grains du squelette solide formé par les granulats, le ciment et les additions. L'eau efficace représente donc l'eau impliquée dans l'hydratation. D'autre part, le béton comprend de l'eau retenue par la porosité des granulats. Cette eau n'est pas prise en compte dans l'eau efficace. On la suppose prisonnière et ne participant pas à l'hydratation du ciment. L'eau totale représente la totalité de l'eau présente dans le mélange (au moment du malaxage).

La conductivité thermique (encore appelée lambda ($\lambda$)) est une grandeur physique caractérisant ie comportement des matériaux lors du transfert de chaleur par conduction. La conductivité thermique représente la quantité de chaleur transférée par unité de surface et par une unité de temps sous un gradient de température. Dans le système international d'unités, la conductivité thermique est exprimée en watts par mètre kelvin, ($W \cdot m^{-1} \cdot K^{-1}$). Les bétons classiques ont une conductivité thermique à 23°C et 50 % d'humidité relative entre 1,3 et 2,1. Les bétons légers structuraux traditionnels possèdent des conductivités thermiques généralement supérieures à 0,8 W/m.K à 23°C et 50 % d'humidité relative.

Diminuer la conductivité thermique des bétons légers structuraux est hautement désirable puisqu'elle permet une économie d'énergie de chauffage dans les immeubles d'habitation ou de travail. De plus cette diminution permet de réduire les ponts thermiques, particulièrement dans les constructions de bâtiments à plusieurs étages et ayant une isolation thermique par l'intérieur, notamment les ponts thermiques des planchers intermédiaires. Cependant, une diminution de la conductivité thermique des bétons est habituellement obtenue par une diminution de la densité des bétons. Or, cette diminution a pour effet une perte de résistance des bétons, ce qui les rend impropres à remplir leur fonction de structure.

Diverses formulations de bétons présentant une conductivité thermique diminuée ont été proposées. Cependant de telles formulations ne permettent pas d'obtenir des valeurs de résistance à la compression suffisantes. Ainsi US 3,814,614 décrit l'utilisation de particules de verre expansé pour l'obtention d'un béton léger dit « structurel ». Les bétons décrits dans ce document ne présentent cependant pas de valeurs de résistance à la compression satisfaisantes. De même GB 1,165,005 décrit l'utilisation de cendres pulvérisées dans des formulations de bétons légers structuraux. Là encore si laconductivité thermique est effectivement diminuée la résistance à la compression de tels bétons est également très diminuée et n'est pas satisfaisante. Enfin l'utilisation de granulats d'argiles ou de schistes expansé(e)s pour la fabrication de bétons légers non structurels est connue, voir par exemple les demandes de brevets publiées BE 843,768 et FR 2,625,131. Les documents US 2007/0125275, US 4 077 809, US 2002/117086 et JP 06 122569 décrivent des formulations de bétons légers.

Un des buts de l'invention est de proposer une utilisation d'une formulation de bétons légers permettant d'allier résistance à la compression suffisante pour un béton de structure et faible conductivité thermique.

L'invention est l'utilisation d'un béton léger structurel comprenant au moins :

- un liant hydraulique ;
- de l'eau efficace ;
- un superplastifiant ; et
- des granulats ;

ledit béton présentant une densité à l'état frais variant de 1,40 à une valeur $D_{max}$ calculée selon la formule (I)

$$D_{max} = 1,58 + (a \times MA)$$

Formule (I)

dans laquelle a représente un coefficient dont la valeur est égale à 1, avantageusement égale à 0,9, de préférence égale à 0,8

MA représente le pourcentage massique de matières amorphes contenues dans 1 m³ de béton frais ;

ledit béton présentant une densité à l'état frais maximale $D_{max}$ inférieure ou égale à 1,85, avantageusement inférieure ou égale à 1,8, de préférence inférieure ou égale à 1,7 ;

ledit béton présentant un rapport $E_{efficace}/L$ variant de 0,19 à 0,46,

où $E_{efficace}$ représente la quantité d'eau efficace en kilogramme par mètre cube de béton frais

L représente la quantité de ciment et d'additions en kilogrammes par mètre cube de béton frais ;

ledit béton comprenant une quantité d'eau efficace variant de 100 à 230 litres par mètre cube de béton frais ;

ledit béton comprenant une quantité de clinker Portland supérieure ou égale à 150 kilogrammes par mètre cube de béton frais ;

ledit béton comprenant une quantité de (clinker Portland + éventuellement cendres volantes + éventuellement laitiers + éventuellement fumées de silice + éventuellement schistes calcinés + éventuellement argiles calcinées) supérieure ou égale à 300 kilogrammes par mètre cube de béton frais ;

ledit béton présentant un volume de pâte supérieur ou égal à 300 l/m³ de béton frais,

et ledit béton comprenant, en outre, de 1% à 16 % en volume d'air

comme matériau de construction pour réduire les ponts thermiques.

La quantité d'adjuvant peut être ajustée de manière à obtenir un étalement cible à la livraison du béton.

Les granulats dans l'invention peuvent avoir une taille inférieure ou égale à 31,5 mm.

On entend par « matières amorphes » dans l'invention des substances minérales non cristallisées, c'est-à-dire ne possédant pas de structure atomique ordonnée.

On entend par « volume de pâte » dans l'invention le volume du ciment, des additions, de l'eau efficace, de l'air, des adjuvants et des granulats de taille strictement inférieure à 63 1-m.

Le béton léger structurel dans l'invention peut être un béton préfabriqué sur chantier, un béton prêt à l'emploi ou un béton fabriqué dans une usine de production d'éléments préfabriqués. De préférence, le béton dans l'invention est un béton prêt à l'emploi. On entend par « béton prêt à l'emploi » dans l'invention un béton présentant un temps ouvert d'ouvrabilité suffisant pour permettre le transport du béton jusqu'au chantier où il sera coulé. A la livraison, le béton doit avoir une classe de consistance au moins S3 selon la norme EN 206-1. De préférence, le temps ouvert d'ouvrabilité des bétons prêts à l'emploi peut être d'au moins 2 heures.

Dans le cas où le béton est un béton prêt à l'emploi, il faut :

- ajuster le dosage en superplastifiant de manière à obtenir un étalement initial du béton frais supérieur ou égal à 550 mm (mesure réalisée selon le document « Bétons autoplaçants - recommandations provisoires » diffusé par l'Association Française de Génie Civil en juillet 2002, annexe 1) ; et
- utiliser des granulats secs ou pré-saturés en eau présentant une quantité d'eau absorbable inférieure ou égale à 10 % par rapport à la masse totale de granulats secs (dans le cas des granulats pré-saturés en eau, la quantité d'eau absorbable considérée sera la quantité d'eau absorbable avant la pré-saturation moins la quantité d'eau utilisée pour la pré-saturation). De manière équivalente, en utilisant d'autres unités, la quantité d'eau absorbable des granulats utilisés dans les formulations de béton prêt à l'emploi selon la présente invention doit être inférieure ou égale à 80 litres par mètre cube de béton frais.

Selon une variante, le béton dans l'invention peut comprendre :

- de 0,5 à 20 % en volume d'air.

Un liant hydraulique dans l'invention comprend du ciment Portland et éventuellement des additions. Le ciment Portland dans l'invention est tel que défini dans la norme Européenne EN 197-1. Il comprend principalement du clinker Portland. On entend par le terme « clinker Portland » selon la présente invention un matériau hydraulique constitué d'au moins deux tiers en masse de silicates de calcium ($3CaO.SiO2$ et $2CaO.SiO2$), la partie restante étant constituée de phases contenant de l'aluminium et du fer, ainsi que d'autres composants. Le rapport massique $(CaO)/(SiO2)$ ne doit pas être inférieur à 2,0. La teneur en oxyde de magnésium (MgO) ne doit pas dépasser 5,0 % en masse.

Les additions sont généralement des matériaux pulvérulents utilisables en substitution partielle du ciment. Les additions dans l'invention peuvent être des poudres calcaires, siliceuses ou silico-calcaires, des cendres volantes, des laitiers, des fumées de silice, des schistes calcinés, des argiles calcinées (dont les métakaolins), des pouzzolanes ou leurs mélanges. Les additions sont telles que définies dans la norme Européenne EN 206 paragraphe 3.1.23.

Les poudres calcaires, siliceuses ou silico-calcaires dans l'invention sont des granulats fins, caractérisés par une taille de particules variant en général de 0.1 à 1251-m.

On entend par le terme « cendre volante » selon la présente invention un matériau obtenu par précipitation électrostatique ou mécanique de particules pulvérulentes contenues dans les fumées des chaudières alimentées au charbon pulvérisé (voir norme EN 197-1 paragraphe 5.2.4). Les cendres volantes dans l'invention peuvent être de nature siliceuse ou calcique.

On entend par le terme « laitier » selon la présente invention un laitier choisi parmi les laitiers granulés de haut fourneau selon la norme EN 197-1 paragraphe 5.2.2.

On entend par le terme « fumée de silice » selon la présente invention un matériau obtenu par réduction de quartz de grande pureté par du charbon dans des fours à arcs électriques utilisés pour la production de silicium et d'alliages de ferrosilicium (voir norme EN 197-1 paragraphe 5.2.7). Les fumées de silice sont formées de particules sphériques comprenant au moins 85% en masse de silice amorphe.

On entend par le terme « schiste calciné » selon la présente invention un matériau produit dans un four spécial à une température d'environ 800°C comprenant principalement du silicate bicalcique et de l'aluminate monocalcique. (voir norme EN 197-1 paragraphe 5.2.5)

On entend par le terme « argiles calcinées » selon la présente invention des argiles qui ont subi un traitement thermique.

On entend par le terme « argiles » selon la présente invention des phyllosilicates, principalement à structure en feuillets, voire fibreux (par exemple des silicates d'aluminium et/ou de magnésium), qui, caractérisés par diffraction par rayons X par exemple, possèdent un paramètre de maille atomique des plans cristallographiques [001] ($d_{(001)}$) variant de 7 à 15 Angströms. Les argiles dans l'invention peuvent être choisies parmi la kaolinite ($d_{(001)}$ = 7 Angströms), les smectites (terme générique utilisé pour désigner les argiles gonflantes, dont la montmorillonite), l'illite, la muscovite ($d_{(001)}$ = 10 Angströms), les chlorites ($d_{(001)}$ = 14 Angströms), ou leurs mélanges.

On entend par le terme « pouzzolanes » selon la présente invention des matériaux siliceux et/ou silico-alumineux comprenant essentiellement du $SiO2$ réactif et du $Al2O3$. Parmi les pouzzolanes, on peut citer les pouzzolanes naturelles, qui sont en général des matériaux d'origine volcanique ou des roches sédimentaires, et les pouzzolanes calcinées, qui sont des matériaux d'origine volcanique, des argiles, des schistes ou des roches sédimentaires activés thermiquement. (voir norme EN 197-1 paragraphe 5.2.3) Les pouzzolanes dans l'invention peuvent être choisies parmi les ponces, les tuff, les scories ou leurs mélanges.

Selon une variante, le béton dans l'invention comprend au moins un granulat traité. De préférence, tous les granulats sont des granulats traités. On entend par « granulats traités » dans l'invention des granulats qui ont fait l'objet d'un mélange ou d'une aspersion avec un matériau qui leur confère une propriété particulière. Par exemple, le traitement peut rendre les granulats plus hydrophobes ou diminuer leur capacité d'absorption en eau. Un granulat traité dans l'invention peut être :

- imprégné avec une résine pure (à base d'alcane, d'asphalte, de polyéthylène vinyl acétate, de silane, de siloxane ou encore d'époxy) ; ou
- imprégné par immersion ou pulvérisation d'une émulsion des résines citées ci-dessus ; ou
- imprégné avec une solution qui gélifie dans le temps, comme par exemple un gel inorganique (silicate de sodium, hydroxyde d'aluminium, hydroxyde de fer, hydroxyde de magnésium, ou gel de carbonate de calcium), un gel organique (acétate de cellulose, nitro-cellulose ou alcool + oléate de sodium), ou encore un gel organique naturel (polysaccharide, dont le dextran ou l'agar-agar, caséine ou huiles gélifiées).

Selon une variante, le béton dans l'invention comprend des billes de polystyrène. Lesdites billes de polystyrène peuvent être utilisées en remplacement partiel ou total de l'air, et/ou en remplacement partiel des granulats.

Selon une variante, le béton dans l'invention comprend un liant hydraulique choisi parmi un ciment de type :

- CEM III, CEM IV ou CEM V, ou
- CEM I ou CEM II, en mélange avec des additions.

De préférence, les additions peuvent être de type laitier et/ou cendres volantes et/ou fumées de silice. Selon une variante, le béton dans l'invention comprend un ciment de type CEM I ou CEM II, en mélange avec des additions de type laitier et/ou cendres volantes et/ou fumées de silice.

Selon une variante, le béton dans l'invention comprend des granulats choisi parmi les gravillons, les sables ou leurs mélanges. Dé préférence, le béton dans l'invention comprend un rapport volumique sable/gravillons variant de 3/7 à 7/3.

Selon une variante, le béton dans l'invention comprend une proportion d'air en volume variant de 1 % à 16 %, de préférence de 2% à 8% en volume. De préférence, la proportion d'air en volume est inférieure à 5%.

Selon une variante, le béton dans selon l'invention comprend un superplastifiant tel qu'un polycarboxylate polyoxyde.

De préférence, le béton dans l'invention comprend des granulats légers. Selon une variante du béton dans l'invention, la totalité des granulats sont des granulats légers.

Selon une autre variante de l'invention, le béton léger structurel dans l'invention comprend des granulats non légers. De préférence, la totalité des granulats sont des granulats non légers.

Selon une autre variante, le béton dans l'invention comprend des granulats de verre expansé. De préférence, tous les granulats sont des granulats de verre expansé. Cette solution est notamment avantageuse pour augmenter la quantité de matière amorphe dans le béton dans l'invention.

De préférence, le béton dans l'invention comprend une quantité de granulats inférieure ou égale à 700 litres par mètre cube de béton frais.

Pour obtenir et contrôler la proportion d'air désirée il est possible d'ajouter à la composition un ou plusieurs adjuvants entraîneurs d'air. Ces adjuvants sont d'usage courant dans le domaine des bétons et peuvent être par exemple choisis dans le groupe des tensioactifs ioniques ou non ioniques, par exemple les oléates, les sulfonates et les carboxylates.

Le liant hydraulique dans l'invention comprend du ciment et éventuellement des additions.

Le ciment dans l'invention est de préférence tel que défini par la norme Européenne EN197.1. Aussi, le ciment dans l'invention peut être de type CEM I, CEM II, CEM III, CEM IV ou CEM V. De préférence, le ciment dans l'invention est de type :

- CEM III, CEM IV ou CEM V, ou
- CEM I ou CEM II, en mélange avec des additions.

De préférence, les additions dans l'invention peuvent être des laitiers et/ou des cendres volantes et/ou des fumées de silice. Avantageusement, les additions dans l'invention sont des laitiers.

La demanderesse a découvert que l'utilisation d'un ciment de type CEM III, CEM IV ou CEM V, ou de types CEM I ou CEM II, avec des additions de type laitier et/ou cendres volantes et/ou fumées de silice permet d'obtenir, de manière surprenante, un béton léger structurel comprenant moins de 5% en volume d'air, tout en conservant une conductivité thermique inférieure à 0,65 W/m.K à 23°C et 50% d'humidité relative (HR). De préférence, l'utilisation d'un ciment de type CEM III, CEM IV ou CEM V, ou de types CEM I ou CEM II, avec des additions de type laitier et/ou cendres volantes et/ou fumées de silice permet de ne pas ajouter d'air lors de la préparation d'un béton léger structurel selon l'invention, tout en conservant une conductivité thermique inférieure à 0,65 W/m.K à 23°C et 50% d'HR (humidité relative).

On appelle conductivité thermique dans l'invention la conductivité thermique à 23°C et 50% d'HR, déterminée selon le protocole suivant :

- mesure de la conductivité thermique à sec selon la méthode de la plaque chaude gardée (norme ISO 8302), après séchage complet de l'échantillon, puis
- conversion de la valeur obtenue pour correspondre à des conditions d'humidité relative de 50% en appliquant un coefficient de 1,083, conformément à la norme NF EN ISO 10456 paragraphe 7.3.

Des adjuvants peuvent être ajoutés pour modifier la vitesse de prise ou pour modifier ou contrôler certaines propriétés physico-chimiques de la composition, comme par exemples des plastifiants ou des agents hydrofugeants.

Selon un mode de réalisation préféré de l'invention, on utilise un adjuvant superplastifiant de la famille des polycarboxylates polyoxyde (PCP). D'autres adjuvants superplastifiants qui peuvent être utilisés pour la mise en pratique de l'invention sont, par exemple, les polynaphtalènes sulfonates, les lignosulfonates, les phosphonates, le carboxylates, les résines mélamines.

Selon un mode de réalisation préféré, le béton léger structurel possède une conductivité thermique à 23°C et 50% d'HR inférieure à 0,65 W/m.K, préférablement inférieure à 0,60 W/m.K, et encore plus préférablement inférieure à 0,55 W/m.K.

Avantageusement le béton dans l'invention présente une conductivité thermique à 23°C et 50% d'HR inférieure à 0,60 W/m.K pour des bétons appartenant à une classe de résistance LC 25/28 (c'est-à-dire ayant une résistance caractéristique à la compression à 28 jours sur cylindre d'au moins 25MPa, déterminée selon la norme EN 206). Selon un mode de réalisation préféré la résistance caractéristique à la compression estd'au moins 28MPa, plus particulièrement d'au moins 35MPa et encore plus préférablement d'au moins 45MPa.

L'invention porte également sur un procédé de préparation d'un béton léger structurel tel que décrit ci-dessus, ce procédé comprenant le mélange d'au moins :

- un liant hydraulique ;
- de l'eau efficace ;
- un superplastifiant ; et
- des granulats ;

ledit béton présentant un rapport $E_{efficace}/L$ variant de 0,19 à 0,46,
où $E_{efficace}$ représente la quantité d'eau efficace en kilogramme par mètre cube de béton frais
L représente la quantité de ciment et d'additions en kilogrammes par mètre cube de béton frais ;
ledit béton comprenant une quantité d'eau efficace variant de 100 à 230 litres par mètre cube de béton frais ;
ledit béton comprenant une quantité de clinker Portland supérieure ou égale à 150 kilogrammes par mètre cube de béton frais ;
ledit béton comprenant une quantité de (clinker Portland + éventuellement cendres volantes + éventuellement laitiers + éventuellement fumées de silice + éventuellement schistes calcinés + éventuellement argiles calcinées) supérieure ou égale à 300 kilogrammes par mètre cube de béton frais ;
et ledit béton présentant un volume de pâte supérieur ou égal à 300 l/m$^3$de béton frais
et ledit béton comprenant, en outre, de 1 à 16% en volume d'air.

Selon une autre variante, l'invention décrit également sur un procédé de préparation d'un béton léger structurel tel que décrit ci-dessus, ce procédé comprenant le mélange d'au moins :

- un liant hydraulique ;
- de l'eau efficace ;
- un superplastifiant ; et
- des granulats ;

ledit béton étant caractérisé en ce qu'il présente une densité à l'état frais variant de 1,40 à une valeur $D_{max}$ calculée selon la formule (I)

$$D_{max} = 1,58 + (a \times MA)$$

Formule (I)

dans laquelle a représente un coefficient dont la valeur est égale à 1, avantageusement égale à 0,9, de préférence égale à 0,8
MA représente le pourcentage massique de matières amorphes contenues dans 1 m$^3$ de béton frais ;
ledit béton présentant une densité à l'état frais maximale $D_{max}$ inférieure ou egale à 1,85, avantageusement inférieure ou égale à 1,8, de préférence inférieure ou égale à 1,7 ;

ledit béton présentant un rapport $E_{efficace}/L$ variant de 0,19 à 0,46,
où $E_{efficace}$ représente la quantité d'eau efficace en kilogramme par mètre cube de béton frais
L représente la quantité de ciment et d'additions en kilogrammes par mètre cube de béton frais ;
ledit béton comprenant une quantité d'eau efficace variant de 100 à 230 litres par mètre cube de béton frais ;

ledit béton comprenant une quantité de clinker Portland supérieure ou égale à 150 kilogrammes par mètre cube de béton frais ;
ledit béton comprenant une quantité de (clinker Portland + éventuellement cendres volantes + éventuellement laitiers + éventuellement fumées de silice + éventuellement schistes calcinés + éventuellement argiles calcinées) supérieure ou égale à 300 kilogrammes par mètre cube de béton frais ;
et ledit béton présentant un volume de pâte supérieur ou égal à 300 l/m$^3$de béton frais.

**Exemples de modes de réalisation préférés**

Détermination de la quantité de matières amorphes dans le béton

On détermine tout d'abord la quantité de matière amorphe de chaque constituant solide du béton de la manière décrite ci-dessous.

On réalise un mélange entre le constituant à analyser et un composé de référence entièrement cristallisé dont on connaît la composition (par exemple rutile, alumine ou zircon). Le mélange comprend en général 50 % en masse du constituant à analyser et 50 % en masse du composé de référence. Le mélange doit être parfaitement homogénéisé et les proportions relatives du constituant à analyser et du composé de référence doivent être connues avec précision.

Le composé de référence sera choisi en fonction du constituant à analyser. De préférence, selon un premier cas, le composant de référence est différent des cristaux que l'on peut trouver dans le constituant à analyser. Dans tous les cas, afin de ne pas fausser la mesure quantitative, on choisira un composé de référence proche en terme d'intensité de réponse des cristaux présents dans le constituant à analyser, comme cela est connu dans le domaine de la diffraction par rayons X.

On réalise une mesure quantitative du mélange, par exemple en utilisant la méthode de diffraction par rayons X quantitative (voir à ce sujet la publication Quantitative X-Ray Diffraction Analysis, L.E. COPELAND and Robert H. BRAGG, Analytical Chemistry).

On obtient la nature et la quantité des cristaux présents dans le mélange. La matière amorphe ne diffracte pas les rayons X et n'apparaît donc pas dans les résultats de la mesure quantitative. La quantité de matière amorphe du constituant à analyser ($MA_i$) en pourcentage massique par rapport à la masse du constituant à analyser peut être déterminée selon la formule (II) suivante :

$$MA_i = 100 \times [100 \div (100 - X_0)] \times [1 - (X_0 \div X_m)]$$

Formule (II)

dans laquelle $X_0$ représente le pourcentage massique du composé de référence dans le mélange (constituant à analyser + composé de référence) ;
$X_m$ représente le pourcentage massique du composé de référence déterminé par la mesure quantitative.

Selon un deuxième cas, le matériau de référence est une phase cristalline également présente dans le constituant à analyser, la mesure quantitative est appliquée d'abord séparément au constituant à analyser et au matériau de référence, afin de déterminer la quantité de la phase cristalline commune dans le constituant à analyser. De cette manière, connaissant la quantité de la phase cristalline dans le constituant à analyser et la proportion relative du constituant à analyser et du matériau de référence, on peut déterminer $X_m$. Ensuite, on peut appliquer la formule (II).

Enfin, pour obtenir la quantité de matière amorphe dans le béton frais (en pourcentage massique), on multiplie la quantité de matière amorphe de chacun des constituants du béton par la quantité de ce constituant dans 1 mètre cube de béton, puis on fait ia somme des différentes valeurs obtenues.

Le béton léger structurel dans l'invention est exemplifié par les modes de réalisations préférentiels décrits ci-dessous.

Exemples 1 et 2 : 4ranulats de schiste expansé

Exemple 1

| Composants | masses et volumes rapportés au m³ de matériau frais | % en poids |
|---|---|---|
| Ciment portland Artificiel | 373 kg | 24,5% en poids |
| Eau totale | 188 l | 12,5% |
| ...(dont eau efficace) | 103 l | 7,5%) |
| Air | 143 l soit 14.3% en volume | |
| | | |
| Sable de schiste expansé | 539 kg | 35.5% |
| Gravillons de schiste expansé | 408 kg | 27% |
| Superplastifiant | 6 l | 0.4% |
| Entraîneur d'air | 3 l | 0.2% |
| Matières amorphes | 0 | 0 |

Le ciment utilisé est du ciment de Portland artificiel de masse volumique de 3,15. Ce ciment est de la classe CEM I 52,5 (Standard EN197-1) provenant de l'usine du Havre.

Le sable de schiste expansé possède une masse volumique réelle à l'état sec de 1,92 et une absorption d'eau de 4,5% en poids.

Les gravillons de schiste expansé ont une granulométrie allant de 4 à 10 mm, une masse volumique réelle de 1,29 et une absorption d'eau de 7,2% en poids. Ils proviennent de la société GEM (Mayenne, France).

L'adjuvant superplastifiant est de la famille des polycarboxylates polyoxyde (PCP), il s'agit du GLENIUM 27 de la société BASF et l'entraîneur d'air choisi est un sulfonate : le Microair 104 de la société BASF. Le filler calcaire présente une densité de 2,6 et une distribution granulométrique comprise entre 0 et 100 1-m (diamètre médian 8 1-m), et est disponible sous le nom de BETOCARB HP-EN (anciennement appelé BETOCARB P2 d'Entrains) par la société OMYA.

La détermination de la teneur en air des bétons a été réalisée selon la norme ASTM C173.

Le procédé de fabrication est celui de bétons légers standards et peut être modifié et/ou ajusté si désiré. Le procédé utilisé dans ces exemples est le même pour les exemples 1 à 3.

Dans ces exemples les ingrédients sont introduits dans un malaxeur standard de marque ZYKLOS.

Une étape préliminaire de pré-mouillage des granulats est effectuée pendant laquelle les granulats sont malaxés deux minutes avec l'eau de pré-mouillage puis sont laissés en repos pour une certaine période de temps (par exemple 24 heures). Puis les étapes suivantes sont effectuées :

- Mélange des granulats pendant 1 minute
- Arrêt du malaxage pendant 4 minutes
- Introduction en 30 secondes des liants (ciment et filler) dans le malaxeur
- Reprise du malaxage pendant 1 minute
- Introduction en 30 secondes de l'eau de gâchage dans le malaxeur, tout en maintenant le malaxage
- Malaxage pendant 1 minute.

Les cylindres et les cubes sont confectionnés en trois couches, et le matériau est mis en place au moyen d'une barre de piquage. Après remplissage des moules, les éprouvettes sont conservées à 20:±1°C et à 95% HR. Après démoulage à 24 h elles sont placées dans l'eau pour les éprouvettes de densité supérieure à 1 et sur une étagère pour les autres. Les cylindres de compression sont rectifiés avant essai.

Les mesures de résistance à la compression sont effectuées sur des cylindres de 11 cm de diamètre et de 22 cm de hauteur. Une estimation de la résistance sur cube de 15 cm de côté est également donnée.

Pour obtenir la densité à l'état frais du béton, on détermine la masse volumique du béton frais selon la norme EN12350-6, puis on la divise par la masse volumique de l'eau, soit 1000 kilogrammes par mètre cube.

La teneur en eau efficace d'un béton est la différence entre la quantité d'eau totale contenue dans 1 mètre cube de béton frais et la quantité d'eau absorbable par les granulats. La quantité d'eau absorbable par les granulats est déterminée en multipliant le coefficient d'absorption d'eau des granulats par la masse de granulats secs dans 1 mètre cube de béton. Le coefficient d'absorption d'eau des granulats est obtenue selon la méthode décrite dans l'annexe C de la norme EN 1097-6 à 24h. Cette méthode est valable pour les granulats dont la taille varie de 4 à 31,5 mm. Pour les granulats dont la taille est inférieure à 4 mm, il faut utiliser la méthode décrite dans la norme EN1067-6 chapitre 9.

Les autres propriétés du béton ainsi obtenu ont été déterminées en utilisant les normes EN12390-3, EN206-1, ISO 3806 et NF EN ISO 10456. Ces propriétés caractéristiques sont les suivantes :

| | |
|---|---|
| Rapport $E_{efficace}/L$: | 0,28 |
| Densité à l'état frais : | 1,48 |
| Densité à l'état sec : | 1,39 |
| Résistance en compression à 28 jours sur cylindre : | 35 MPa |
| Estimation de la résistance sur cube de 15 cm de côté : | 40 MPa |
| Conductivité thermique à 23°C et 50% d'HR : | 0,58 W/m.K |

Exemple 2:

| Composants | Masses et volumes rapportés au m³ de matériau frais | % en poids |
|---|---|---|
| Masse ciment de Portland | 393 kg | 25% |
| Masse de filler calcaire | 126 kg | 8% |
| Eau totale | 209 l | 13% |
| (...dont Eau efficace) | 152 l | 9,5%) |
| Air | 80 l soit 8% en volume | |
| Sable de schiste expansé | 546 kg | 34,5% |
| Gravillons de schiste expansé | 298 kg | 19% |
| Superplastifiant | 5 l | 0,3% |
| Entraîneur d'air | 1 l | 0,05% |
| Matières amorphes | 0 | 0 |

Le ciment, le superplastifiant, l'entraîneur d'air et le filler calcaire sont les mêmes que ceux décrits à l'exemple 1.

Le sable de schiste expansé possède une masse volumique réelle à l'état sec de 1,92, et une absorption d'eau de 4,5% en masse.

Les gravillons de schiste expansé ont une granulométrie allant de 4 à 10 mm, une masse volumique réelle de 1,29 et une absorption d'eau de 7,2% en masse. Le sable et les gravillons proviennent de la société GEM (Mayenne, France).

Propriétés du béton ainsi obtenu :

| | |
|---|---|
| Rapport $E_{efficace}/L$; | 0,29 |
| Densité à l'état frais : | 1,58 |
| Densité à l'état sec : | 1,41 |
| Résistance mécanique en compression à 28 jours sur cylindre : | 40 MPa |
| Estimation de la résistance sur cube de 15 cm de côté : | 45 MPa |
| Conductivité thermique à 23°C et 50% d'HR : | 0,61 W/m.K |

Exemple 3 : Seconde classe de granulats : argile expansée

| Composants | Masses et volumes rapportés au m³ de matériau frais | % en poids |
|---|---|---|
| Masse de ciment Portland | 433 kg | 27,5 % |

(suite)

| Composants | Masses et volumes rapportés au m³ de matériau frais | % en poids |
|---|---|---|
| Masse de filler calcaire | 150 kg | 9,5 % |
| Eau totale | 275 l | 17,5% |
| (...dont Eau efficace) | 119 l | 7,5%) |
| Air | 90 l soit 9% en volume | |
| Sable d'argile expansée | 307 kg | 19,5 % |
| Gravillons d'argile expansée | 394 kg | 25 % |
| Superplastifiant | 4 l kg | 0,25% |
| Entraîneur d'air | 0,8 l kg | 0,05% |
| Matières amorphes | 0 | 0 |

Le ciment de Portland, le filler, le superplastifiant et l'entraîneur d'air sont les mêmes que ceux utilisés à l'exemple 1.

Le sable d'argile expansée possède une masse volumique réelle à l'état sec de 1,15, et une absorption d'eau de 28% en masse.

Les gravillons d'argile expansée ont une granulométrie allant de 4 à 8 mm, une masse volumique réelle de 1,28 et une absorption d'eau de 18% en masse. Le sable et les gravillons proviennent de la société Argex (Belgique).

Propriétés du béton ainsi obtenu :

Rapport $E_{efficace}$/L :                                                                  0,20
Densité à l'état frais :                                                                  1,41
Densité à l'état sec :                                                                  1,26
Résistance mécanique en compression à 28 jours sur cylindre :     29 MPa
Estimation de la résistance sur cube de 15 cm de côté :            33 MPa
Conductivité thermique à 23°C et 50% d'HR :                        0,52 W/m.K

Les formulations de bétons légers structurels dans l'invention allient une forte résistance à la compression à une conductivité thermique diminuée par rapport à celles des bétons habituellement disponibles dans le domaine. De plus ces formulations sont simples et aisées à mettre en pratique. Enfin les matériaux utilisés sont d'un coût relativement faible et facilement disponibles. Ceci rend ces formulations particulièrement utiles dans l'industrie.

Exemple4: Seconde classe de granulats : argile expansée-impact de la nature des additions utilisées

La substitution volumique du filler calcaire évoquée précédemment par de la cendre volante ou du laitier de hauts fourneaux permet de diminuer considérablement la conductivité thermique sans pénaliser les résistances mécaniques.

L'exemple avec le laitier montre qu'avec ce type d'addition, il est possible de formuler un béton sans air entraîné.

| Composants | Masses et volumes rapportés au m³ de matériau frais | | |
|---|---|---|---|
| Type d'addition | Filler calcaire | Cendres volantes | Laitier |
| Masse de ciment Portland | 408 kg | 408 kg | 408 kg |
| Masse de filler calcaire | 172 kg | | |
| Masse de cendres volantes | | 152 kg | |
| Masse de laitier | | | 195 kg |
| Eau totale | 266 l | 266 l | 266 l |
| (...dont Eau efficace) | 133 l | 133 l | 133 l |

(suite)

| Composants | Masses et volumes rapportés au m$^3$ de matériau frais | | |
|---|---|---|---|
| Type d'addition | Filler calcaire | Cendres volantes | Laitier |
| Air | 25 l soit 2,5% en volume | 25 l soit 2,5% en volume | 25 l soit 2,5% en volume |
| Sable d'argile expansée | 306 kg | 306 kg | 306 kg |
| Gravillons d'argile expansée | 344 kg | 344 kg | 344 kg |
| Superplastifiant | 4,06 kg | 3,92 kg | 4,22 kg |
| Plastifiant | 1,33 kg | 1,29 kg | 1,39 kg |
| Matières amorphes | 0 | 103 kg | 185 kg |

Le ciment de Portland, le filler calcaire, le superplastifiant sont les mêmes que ceux présentés à l'exemple 1. Le sable et les gravillons d'argiles expansés sont identiques à ceux présentés dans l'exemple 3. L'adjuvant plastifiant est de la famille des lignosulfonates, il s'agit du POZZOLITH 391 N de la société BASF.

La cendre volante utilisée est une cendre de type V (EN 197-1) distribuée par la société Surchistes et provient de la centrale thermique de Carling. La densité de cette cendre est de 2,36, la surface spécifique Blaine est de 3520 cm2/g.

Le laitier utilisé dans cet exemple est le laitier produit par la Société Mittal-Arcelor à Fos Sur Mer. La densité de ce laitier est de 2,95, la surface spécifique Blaine est de 3258 cm2/g.

Le pourcentage massique de matières amorphes est respectivement de 67,8% dans les cendres volantes et de 94,9% dans le laitier.

Propriétés des bétons ainsi obtenus :

| Type d'addition | Filler calcaire | Cendres volantes | Laitier |
|---|---|---|---|
| Rapport $E_{efficace}$/L: | 0,23 | 0,24 | 0,22 |
| Densité à l'état frais: | 1,65 | 1,63 | 1,67 |
| Densité à l'état sec : | 1,47 | 1,46 | 1,48 |
| Résistance mécanique en compression à 28 jours sur cylindre : | 41,8 | 44 | 40,8 |
| Estimation de la résistance sur cube de 15 cm de côté : | 46,8 | 49,2 | 45,7 |
| Conductivité thermique à 23°C et 50% d'HR : | 0,697 | 0,635 | 0,598 |

L'utilisation de laitier ou de cendres volantes à la place du filler calcaire permet de diminuer le conductivité thermique pour des résistances mécaniques équivalentes.

De plus, pour une quantité d'air aussi faible que 2,5% en volume, les formulations comprenant du laitier ou des cendres volantes permettent d'obtenir un coefficient de conductivité thermique inférieure à 0,65, alors que la formulation comprenant le filler calcaire ne le permet pas. L'utilisation de laitier ou de cendres volantes à la place du filler calcaire permet donc de diminuer la quantité d'air tout en maintenant un coefficient de conductivité thermique faible.

L'association du ciment Portland avec les additions à base de laitier ou de cendres peut être remplacée par des ciments composés aux laitiers et/ou aux cendres volantes de type CEM II/A, CEM II/B, CEM III/A, CEM III/B, CEM III/C, CEM V/A ou CEM V/B.

Il est bien entendu que toute caractéristique décrite en rapport avec n'importe quel mode de réalisation peut être utilisée seule, ou en combinaison avec d'autres caractéristiques décrites, et peut aussi être utilisée en combinaison avec une ou plusieurs caractéristiques de n'importe quel autre des modes de réalisation, ou n'importe quelle combinaison de n'importe quel autre des modes de réalisation.

**Revendications**

1. Utilisation d'un béton léger structurel comprenant au moins :

- un liant hydraulique ;
- de l'eau efficace ;
- un superplastifiant ; et
- des granulats

ledit béton présentant une densité à l'état frais variant de 1,40 à une valeur Dmax calculée selon la formule (I)

$$Dmax = 1,58 + (a \times MA)$$

Formule (I)

dans laquelle a représente un coefficient dont la valeur est égale à 1, avantageusement égale à 0,9, de préférence égale à 0,8

MA représente le pourcentage massique de matières amorphes contenues dans 1 m$^3$ de béton frais ;

ledit béton présentant une densité à l'état frais maximale Dmax inférieure ou égale à 1,85, avantageusement inférieure ou égale à 1,8, de préférence inférieure ou égale à 1,7 ;

ledit béton présentant un rapport Eefficace/L variant de 0,19 à 0,46,

où Eefficace représente la quantité d'eau efficace en kilogramme par mètre cube de béton frais

L représente la quantité de ciment et d'additions en kilogrammes par mètre cube de béton frais ;

ledit béton comprenant une quantité d'eau efficace variant de 100 à 230 litres par mètre cube de béton frais ;

ledit béton comprenant une quantité de clinker Portland supérieure ou égale à 150 kilogrammes par mètre cube de béton frais ;

ledit béton comprenant une quantité de (clinker Portland + éventuellement cendres volantes + éventuellement laitiers + éventuellement fumées de silice + éventuellement schistes calcinés + éventuellement argiles calcinées) supérieure ou égale à 300 kilogrammes par mètre cube de béton frais ;

ledit béton présentant un volume de pâte supérieur ou égal à 300 l/m3 béton frais, ledit béton comprenant, en outre, de 1 % à 16 % en volume d'air comme matériau de construction pour réduire les ponts thermiques.

2. Utilisation d'un béton léger structurel selon la revendication 1, **caractérisé en ce qu'**il comprend au moins un granulat qui a fait l'objet d'un mélange ou d'une aspersion avec un matériau.

3. Utilisation d'un béton selon la revendication 1 ou 2, **caractérisé en ce qu'**il comprend un liant hydraulique choisi parmi un ciment de type :

    - CEM III, CEM IV ou CEM V, ou
    - CEM I ou CEM II, en mélange avec des additions.

4. Utilisation d'un béton selon l'une quelconque des revendications 1 à 3, **caractérisé en ce qu'**il comprend un ciment de type CEM I ou CEM II, en mélange avec des additions de type laitier et/ou cendres volantes et/ou fumées de silice.

5. Utilisation d'un béton selon l'une quelconque des revendications 1 à 4, **caractérisé en ce que** la proportion d'air en volume dans le mélange varie de 2 % à 8% en volume.

6. Utilisation d'un béton selon l'une quelconque des revendications 1 à 4, **caractérisé en ce que** la proportion d'air en volume est inférieure à 5 %.

7. Utilisation d'un béton selon l'une quelconque des revendications 1 à 6, **caractérisé en ce qu'**il comprend un superplastifiant tel qu'un polycarboxylate polyoxyde.

8. Utilisation d'un béton léger structurel selon l'une quelconque des revendications précédentes, pour réduire les ponts thermiques de bâtiments à plusieurs étages et ayant une isolation thermique par l'intérieur.

9. Utilisation d'un béton léger structurel selon la revendication 8 pour réduire les ponts thermiques des planchers intermédiaires.

10. Procédé de préparation d'un béton léger structurel, ce procédé comprenant le mélange d'au moins

    - un liant hydraulique ;

- de l'eau efficace ;
- un superplastifiant ; et
- des granulats

ledit béton présentant une densité à l'état frais variant de 1,40 à une valeur Dmax calculée selon la formule (I)

$$Dmax = 1,58 + (a \times MA)$$

Formule (I)

dans laquelle a représente un coefficient dont la valeur est égale à 1, avantageusement égale à 0,9, de préférence égale à 0,8

MA représente le pourcentage massique de matières amorphes contenues dans 1 m$^3$ de béton frais ;

ledit béton présentant une densité à l'état frais maximale Dmax inférieure ou égale à 1,85, avantageusement inférieure ou égale à 1,8, de préférence inférieure ou égale à 1,7 ;

ledit béton présentant un rapport Eefficace/L variant de 0,19 à 0,46,

où Eefficace représente la quantité d'eau efficace en kilogramme par mètre cube de béton frais

L représente la quantité de ciment et d'additions en kilogrammes par mètre cube de béton frais ;

ledit béton comprenant une quantité d'eau efficace variant de 100 à 230 litres par mètre cube de béton frais ;

ledit béton comprenant une quantité de clinker Portland supérieure ou égale à 150 kilogrammes par mètre cube de béton frais ;

ledit béton comprenant une quantité de (clinker Portland + éventuellement cendres volantes + éventuellement laitiers + éventuellement fumées de silice + éventuellement schistes calcinés + éventuellement argiles calcinées) supérieure ou égale à 300 kilogrammes par mètre cube de béton frais ;

ledit béton présentant un volume de pâte supérieur ou égal à 300 l/m3 béton frais, ledit béton comprenant, en outre, de 1 % à 16 % en volume d'air.

**11.** Procédé de préparation selon la revendication 10 d'un béton léger structurel tel que décrit dans l'une des revendications 2 à 7.

**Patentansprüche**

**1.** Verwendung eines Konstruktionsleichtbetons, umfassend wenigstens:

- ein hydraulisches Bindemittel;
- wirksames Wasser;
- ein Superplastifizierungsmittel und
- Zuschläge;

wobei der Beton eine Dichte im frischen Zustand aufweist, die im Bereich von 1,40 bis zu einem Wert Dmax liegt, der gemäß der Formel (I) errechnet wird

$$Dmax = 1,58 + (a \times MA)$$

Formel (I)

in der a einen Koeffizienten darstellt, dessen Wert gleich 1, vorteilhafterweise gleich 0,9, vorzugsweise gleich 0,8 ist,

MA den Massenprozentwert von amorphen Materialien darstellt, die in 1 m$^3$ frischem Beton enthalten sind;

wobei der Beton im frischen Zustand eine maximale Dichte Dmax von unter oder gleich 1,85, vorteilhafterweise unter oder gleich 1,8, vorzugsweise unter oder gleich 1,7 aufweist;

wobei der Beton ein Verhältnis Eetficacell aufweist, das im Bereich von 0,19 bis 0,46 liegt,

wobei Eetficace die Menge an wirksamem Wasser in Kilogramm pro Kubikmeter frischem Beton darstellt,

L die Menge an Zement und Zusätzen in Kilogramm pro Kubikmeter frischem Beton darstellt;

wobei der Beton eine Menge an wirksamem Wasser umfasst, die im Bereich von 100 bis 230 Liter pro Kubikmeter frischem Beton liegt;

wobei der Beton eine Menge an Portlant-Kiinker von über oder gleich 150 Kilogramm pro Kubikmeter frischem Beton umfasst;

wobei der Beton eine Menge an (Portland-Kiinker + gegebenenfalls Flugaschen + gegebenenfalls Schlacken + gegebenenfalls Quarz + gegebenenfalls Kalkschiefer 2 +gegebenenfalls schamottisierten Tonen) von über oder gleich 300 Kilogramm pro Kubikmeter frischem Beton umfasst;

wobei der Beton ein Volumen von Vergussmasse von über oder gleich 300 l/m$^3$ frischem Beton aufweist,

wobei der Beton außerdem 1 bis 16 Volumen-% Luft umfasst

als Baumaterial um Wärmebrücken zu reduzieren.

2. Verwendung eines Konstruktionsleichtbetons gemäß Anspruch 1, **dadurch gekennzeichnet, dass** er wenigstens einen Zuschlag umfasst, der einem Mischen oder einer Besprengung mit einem Material unterzogen wurde.

3. Verwendung eines Betons gemäß Anspruch 1 oder 2, **dadurch gekennzeichnet, dass** er ein hydraulisches Bindemittel, das unter einem Zement des Typs:

   - CEM III, CEM IV oder CEM V oder
   - CEM I oder CEM II

   ausgewählt ist, im Gemisch mit Zusätzen umfasst.

4. Verwendung eines Betons gemäß einem der Ansprüche 1 bis 3, **dadurch gekennzeichnet, dass** er einen Zement des Typs CEM I oder CEM II im Gemisch mit Zusätzen des Typs Schlacke und/oder Flugaschen und/oder Quarzsand umfasst.

5. Verwendung eines Beton gemäß einem der Ansprüche 1 bis 4, **dadurch gekennzeichnet, dass** der Verhältnisanteil an Luft als Volumen in dem Gemisch im Bereich von 2 bis 8 Volumen-% liegt.

6. Verwendung eines Betons gemäß einem der Ansprüche 1 bis 4, **dadurch gekennzeichnet, dass** der Verhältnisanteil an Luft als Volumen unter 5 % liegt.

7. Verwendung eines Betons gemäß einem der Ansprüche 1 bis 6, **dadurch gekennzeichnet, dass** er ein Superplastifizierungsmittel wie ein Polycarboxylatpolyoxid umfasst.

8. Verwendung eines Konstruktionsleichtbetons gemäß einem der vorhergehenden Ansprüche um Wärmebrücken in mehrstöckigen Gebäuden mit Innerenwärmedämmung von innen zu reduzieren.

9. Verwendung eines Konstruktionsleichtbetons gemäß Anspruch 8 um Wärmebrücken von Zwischenböden zu reduzieren.

10. Verfahren zur Herstellung eines Konstruktionsleichtbetons wobei das Verfahren das Mischen von wenigstens:

    - ein hydraulisches Bindemittel;
    - wirksames Wasser;
    - ein Superplastifizierungsmittel und
    - Zuschläge;

    wobei der Beton eine Dichte im frischen Zustand aufweist, die im Bereich von 1 ,40 bis zu einem Wert Dmax liegt, der gemäß der Formel (I) errechnet wird

$$Dmax = 1,58 + (a \times MA)$$

Formel (I)

in der a einen Koeffizienten darstellt, dessen Wert gleich 1, vorteilhafterweise gleich 0,9, vorzugsweise gleich 0,8 ist,

MA den Massenprozentwert von amorphen Materialien darstellt, die in 1 m$^3$ frischem Beton enthalten sind;

wobei der Beton im frischen Zustand eine maximale Dichte Dmax von unter oder gleich 1 ,85, vorteilhafterweise unter oder gleich 1 ,8, vorzugsweise unter oder gleich 1, 7 aufweist;

wobei der Beton ein Verhältnis Eetficacell aufweist, das im Bereich von 0,19 bis 0,46 liegt,

wobei Eetficace die Menge an wirksamem Wasser in Kilogramm pro Kubikmeter frischem Beton darstellt, L die Menge an Zement und Zusätzen in Kilogramm pro Kubikmeter frischem Beton darstellt;

wobei der Beton eine Menge an wirksamem Wasser umfasst, die im Bereich von 1 00 bis 230 Liter pro Kubikmeter frischem Beton liegt;

wobei der Beton eine Menge an Portlant-Kiinker von über oder gleich 150 Kilogramm pro Kubikmeter frischem Beton umfasst;

wobei der Beton eine Menge an (Portland-Kiinker + gegebenenfalls Flugaschen + gegebenenfalls Schlacken + gegebenenfalls Quarz + gegebenenfalls Kalkschiefer 2 +gegebenenfalls schamottisierten Tonen) von über oder gleich 300 Kilogramm pro Kubikmeter frischem Beton umfasst;

wobei der Beton ein Volumen von Vergussmasse von über oder gleich 300 l/m$^3$ frischem Beton aufweist,

wobei der Beton außerdem 1 bis 16 Volumen-% Luft umfasst.

**11.** Verfahren zur Herstellung gemäß Anspruch 10 eines Konstruktionsleichtbetons gemäß einem der Ansprüche 2 bis 7.

**Claims**

**1.** Use of a lightweight structural concrete comprising:

- a hydraulic binder;
- effective water;
- a superplasticizer; and
- aggregates;

said concrete having a density in the fresh state varying from 1.40 to a Dmax value calculated according to formula (I)

$$Dmax = 1.58 + (a \times AM)$$

Formula (I)

in which "a" represents a coefficient for which the value is equal to 1, advantageously equal to 0.9, preferably equal to 0.8,

"AM" represents the mass percentage of the amorphous materials contained in 1m$^3$ of fresh concrete;

said concrete having a maximum fresh state density Dmax less than or equal to 1.85, advantageously less than or equal to 1.8, preferably less than or equal to 1.7;

said concrete having a Weffective/L ratio varying from 0.19 to 0.46, where Weffective represents the quantity of effective water in kilogram per cubic metre of fresh concrete;

"L" represents the quantity of cement and additions in kilograms per cubic metre of fresh concrete;

said concrete comprising a quantity of effective water varying from 100 to 230 litres per cubic metre of fresh concrete;

said concrete comprising a quantity of Portland clinker greater than or equal to 150 kilograms per cubic metre of fresh concrete;

said concrete comprising a quantity of (Portland clinker+optionally fly ash+optionally slags+optionally silica fume+optionally calcined shale+optionally calcined clays) greater than or equal to 300 kilograms per cubic metre of fresh concrete;

said concrete having a volume of paste greater than or equal to 300 l/m$^3$ of fresh concrete;

said concrete further comprising from 1 to 16% by volume of air,

as building materials to reduce thermal bridges.

**2.** Use of a lightweight structural concrete according to claim 1, **characterized in that** it comprises at least one aggregate which has been mixed or sprayed with a material.

**3.** Use of the concrete according to claim 1 or 2, **characterized in that** it comprises a hydraulic binder chosen among a cement of type:

- CEM III, CEM IV or CEM V, or
- CEM I or CEM II, mixed with additions.

**4.** Use of a concrete according to any of claims 1 to 3, **characterized in that** it comprises a cement of the CEM I or CEM II type, mixed with additions of the slag, and/or fly ash, and/or silica fume types.

**5.** Use of a concrete according to any of claims 1 to 4, **characterized in that** the proportion of air in the mix varies from 2% to 8% by volume.

**6.** Use of a concrete according to any of claims 1 to 4, **characterized in that** the proportion of air is less than 5% by volume.

**7.** Use of a concrete according to any of claims 1 to 6, **characterized in that** it comprises a superplasticizer such as a polycarboxylate polyoxide.

**8.** Use of a lightweight structural concrete according to any preceding claims, to reduce thermal bridges of multiple-storied buildings with indoor thermal insulation.

**9.** Use of a lightweight structural concrete according to claim 8 to reduce thermal bridges of intermediary floors.

**10.** A process for the preparation of a lightweight structural concrete, the process comprising the mixture of at least:

- a hydraulic binder;
- effective water;
- a superplasticizer; and
- aggregates;

said concrete having a density in the fresh state varying from 1.40 to a Dmax value calculated according to formula (I)

$$Dmax = 1.58 + (a \times AM)$$

Formula (I)

in which "a" represents a coefficient for which the value is equal to 1, advantageously equal to 0.9, preferably equal to 0.8,
"AM" represents the mass percentage of the amorphous materials contained in 1 $m^3$ of fresh concrete;
said concrete having a maximum fresh state density Dmax less than or equal to 1.85, advantageously less than or equal to 1.8, preferably less than or equal to 1.7;
said concrete having a Weffective/L ratio varying from 0.19 to 0.46, where Weffective represents the quantity of effective water in kilogram per cubic metre of fresh concrete;
"L" represents the quantity of cement and additions in kilograms per cubic metre of fresh concrete;
said concrete comprising a quantity of effective water varying from 100 to 230 litres per cubic metre of fresh concrete;
said concrete comprising a quantity of Portland clinker greater than or equal to 150 kilograms per cubic metre of fresh concrete;
said concrete comprising a quantity of (Portland clinker+optionally fly ash+optionally slags+optionally silica fume+optionally calcined shale+optionally calcined clays) greater than or equal to 300 kilograms per cubic metre of fresh concrete;
said concrete having a volume of paste greater than or equal to 300 l/$m^3$ of fresh concrete;
said concrete comprising from 1 to 16% by volume of air.

**11.** A process for the preparation according to claim 10 of a lightweight structural concrete as described in claims 2 to 7.

**EP 2 203 400 B3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3814614 A
- GB 1165005 A
- BE 843768
- FR 2625131
- US 20070125275 A
- US 4077809 A
- US 2002117086 A
- JP 6122569 A